# EUROPEAN PATENT SPECIFICATION

(11) **EP 2 965 392 B1**
(45) Date of publication and mention of the grant of the patent: **11.09.2019**
(21) Application number: 13876778.5
(22) Date of filing: 06.03.2013
(51) Int. Cl.: H02B 13/025

(54) **DEFORMING PRESSURE RING SEAL FOR AN ARC-RESISTANT SWITCHGEAR DUCT**
VERFORMBARE DRUCKRINGDICHTUNG FÜR EINEN SCHALTANLAGENKANAL MIT LICHTBOGENWIDERSTAND
JOINT ANNULAIRE DÉFORMABLE SOUS PRESSION POUR UN CONDUIT D'APPAREILLAGE DE COUPURE RÉSISTANT À UN ARC

(43) Date of publication of application: 13.01.2016
(73) Proprietor: Schneider Electric USA, Inc., Andover, MA 01810 (US)
(72) Inventor: JORDAN, Jeffrey, T., Andover, MA 01810 (US); VÁZQUEZ, Sergio, Flores, Andover MA 01810 (US); VEGA, Alberto, Guerrero, Andover, MA 01810 (MX); MOTLEY, Gregory, O., Andover, MA 01810 (US)
(74) Representative: Murgitroyd & Company
(86) International application number: PCT/US2013/029406
(87) International publication number: WO 2014/137336

(56) References cited:
- SE-B- 430 637
- SE-B- 430 637
- US-A1- 2007 194 672
- US-B1- 6 407 331
- Eaton: "INSTRUCTION BOOKLET ib48077e", , 27 July 2011 (2011-07-27), pages 1-24, XP055329694, Retrieved from the Internet: URL:http://www.eaton.com/ecm/idcplg?IdcSer vice=GET_FILE&allowInterrupt=1&RevisionSel ectionMethod=LatestReleased&noSaveAs=0&Ren dition=Primary&dDocName=IB48077E [retrieved on 2016-12-15]

## Description

### FIELD OF THE INVENTION

This invention is directed generally to electrical systems, and, more particularly, to a pressure ring for protecting a joint between two adjacent duct sections.

### BACKGROUND OF THE INVENTION

Arc-resistant switchgear enclosures are designed to withstand the effects of an internal arc-fault event. Such event typically causes an explosive reaction that results in a violent pressure wave traveling in the enclosure towards an exhaust vent and causing severe mechanical and thermal stress on the structural components of the enclosure.

One problem with current enclosures occurs at a flanged connection between adjacent duct sections. The connection is typically a flanged butt joint in which respective flanges of the adjacent duct sections are fastened to each other. To meet safety standards, structural integrity is required such that accidental blow-out of the pressure wave through the flanged connection is prevented. For example, industry standards require that indicators placed at certain positions relative to the enclosure do not burn during a test as a result of escaping arc products. IEEE Standard C37.20.7, Paragraph 5.4.2, *Indicator Placement.* This requirement creates a significant design challenge for modular duct extensions that are joined at respective flanges.

To comply with the industry standards, current enclosures are reinforced with added structural components and strengthening materials to restrict the deformation of the flanged connection. However, disadvantages of the current enclosures include cost of the added materials, increased time to assemble the added structural components, and the likelihood of developing a kink in the reinforced flanged connection that inadvertently permits escape of the pressure wave and arc products. Eaton "Instruction Booklet IB48077E", dated July 2011, pp. 1-24 discloses a duct and plenum installation wherein duct sections are first connected using internal seam connectors and then the external seams between duct sections are covered by cover plates. SE430637, published on November 28, 1983, is directed to an electrical indoor switchboard plant with discharge duct common to the various instrument compartments running across the compartments for taking away the smoke gases generated by arcing, wherein the duct is composed of a number of sections individually assigned to the different compartments, open in sideways dimension and closed at the bottom by self-opening openings, which are closely joined together by their adjacent sections, in that the section of the sections facing the ceiling of the switchboard building and possibly other joint edges or flanges are locked together by means of profile rails reaching across said edges.

What is needed is an arc-resistant enclosure that embraces the deformation of the flanged connection.

### SUMMARY OF THE INVENTION

The invention is defined by claim 1.

In an implementation of the present invention, an electrical enclosure assembly for a medium or high voltage system includes a duct chamber with two duct panels joined by a butt joint. Typically, the butt joint is screwed (or otherwise fastened) to side flanges of the duct panels. A pressure ring is screwed to the underside of the butt joint. When an arc fault occurs, an arc-blast force causes a pressure wave to travel through the duct chamber, causing the duct panels to distort. The pressure wave tends to seek an unintended ventilation path through the butt joint. In response to the pressure wave, however, the pressure ring expands to absorb the pressure wave and fills-in any gaps in the butt joint caused by the distortion of the duct panels. As such, the pressure ring blocks the escape of exhaust through the butt joint and allows the duct panels to temporarily conform to the deforming pressure caused by the arc fault.

In another implementation of the present invention, an electrical enclosure assembly includes a first duct section having a first panel with a first flange. A second duct section is adjacent to the first section and has a second panel with a second flange. The second flange is fastened to the first flange of the first panel to form a flanged butt joint between the first and second duct sections. The first and second sections are in a path through which a pressure wave travels, during an arc-fault event in the enclosure, to an exhaust vent. A pressure ring is fastened internally to at least one of the first and second panels and covers the flanged butt joint. The pressure ring deforms with the first and second panels in response to a peak pressure of the pressure wave, the deforming causing the pressure ring to fill-in gaps created in the flanged butt joint by the peak pressure during the arc-fault event.

In another alternative implementation of the present invention, an electrical enclosure assembly includes two adjacent duct sections having rectangular profiles formed by respective top, bottom, left, and right panels. The first and second duct sections are in a path through which a pressure wave travels during an arc-fault event towards an exhaust vent. A top butt joint is formed by two fastened top flanges, each of the top flanges being attached to a respective top panel. A bottom butt joint is formed by two fastened bottom flanges, each of the bottom flanges being attached to a respective bottom panel. A pressure ring is mounted within and has a matching rectangular profile to the rectangular profiles of the duct sections. The pressure ring is attached to at least one of the top panels and at least one of the bottom panels to cover both the top butt joint and the bottom butt joint. The pressure ring deforms in response to a peak pressure of the pressure wave, the deforming causing the pressure ring to seal the top and bottom butt joints during the arc-fault event.

The foregoing and additional aspects and embodiments of the present invention will be apparent to those of ordinary skill in the art in view of the detailed description of various embodiments and/or aspects, which is made with reference to the drawings, a brief description of which is provided next.

### BRIEF DESCRIPTION OF THE DRAWINGS

The invention may best be understood by reference to the following description taken in conjunction with the accompanying drawings.
FIG. 1 is an exploded view of two adjacent duct sections with a partial pressure ring.
FIG. 2 is perspective view of the partial pressure ring of FIG. 1.
FIG. 3A is an elevation view illustrating a prior art duct arrangement prior to an arc-fault event.
FIG. 3B is an elevation view illustrating the duct arrangement of FIG. 3A during a peak pressure of the arc-fault event.
FIG. 3C is an elevation view illustrating the duct arrangement of FIG. 3A after the peak pressure of the arc-fault event.
FIG. 4A is an elevation view illustrating a duct arrangement with a pressure ring prior to an arc-fault event.
FIG. 4B is an elevation view illustrating the duct arrangement of FIG. 4A during a peak pressure of the arc-fault event.
FIG. 4C is an elevation view illustrating the duct arrangement of FIG. 4A after the peak pressure of the arc-fault event.
FIG. 5 is a perspective view illustrating a duct arrangement with a full pressure ring.
FIG. 6 is a perspective view illustrating the full pressure ring of FIG. 5.

### DETAILED DESCRIPTION OF THE ILLUSTRATED EMBODIMENTS

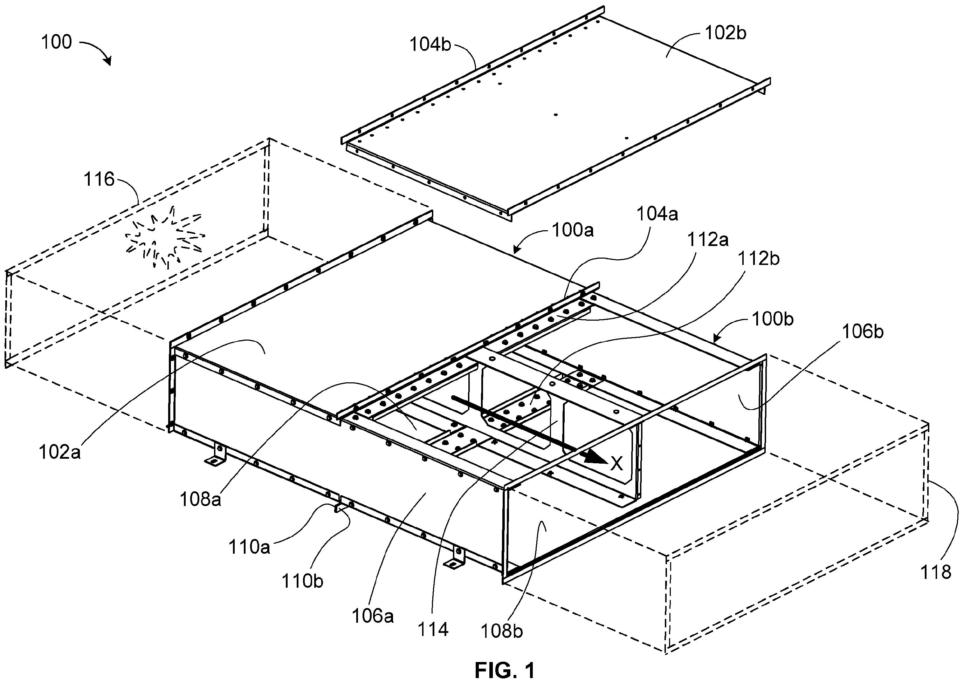

Referring to FIG. 1, an enclosure duct 100 for an arc-resistant enclosure assembly includes two adjacent duct sections 100a, 100b. A left duct section 100a has a top panel 102a with a top flange 104a and, similarly, a right duct section 100b has a top panel 102b with a top flange 104b. The enclosure duct 100 further includes a pair of side panels 106a, 106b and bottom panels 108a, 108b. The bottom panels 108a, 108b includes respective bottom flanges 110a, 110b.

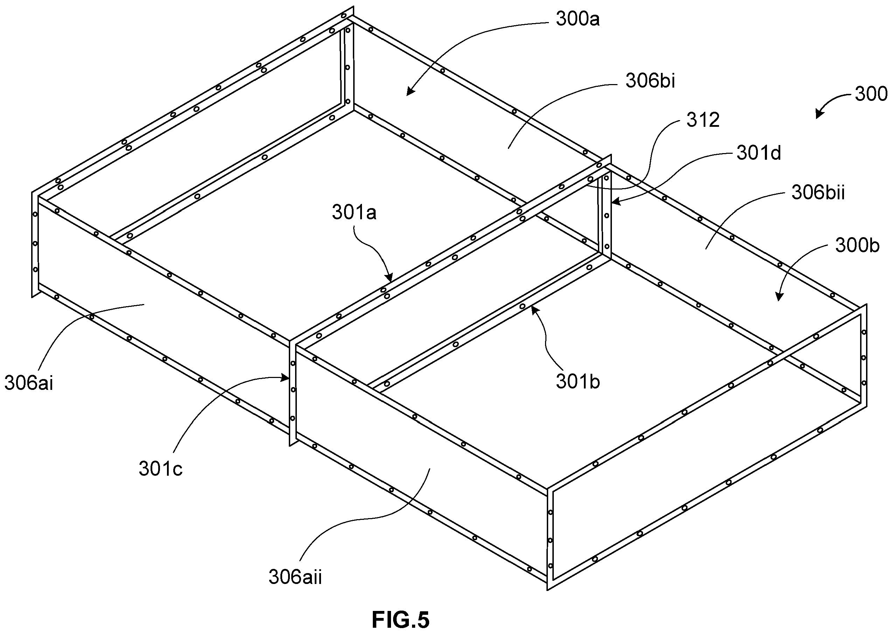

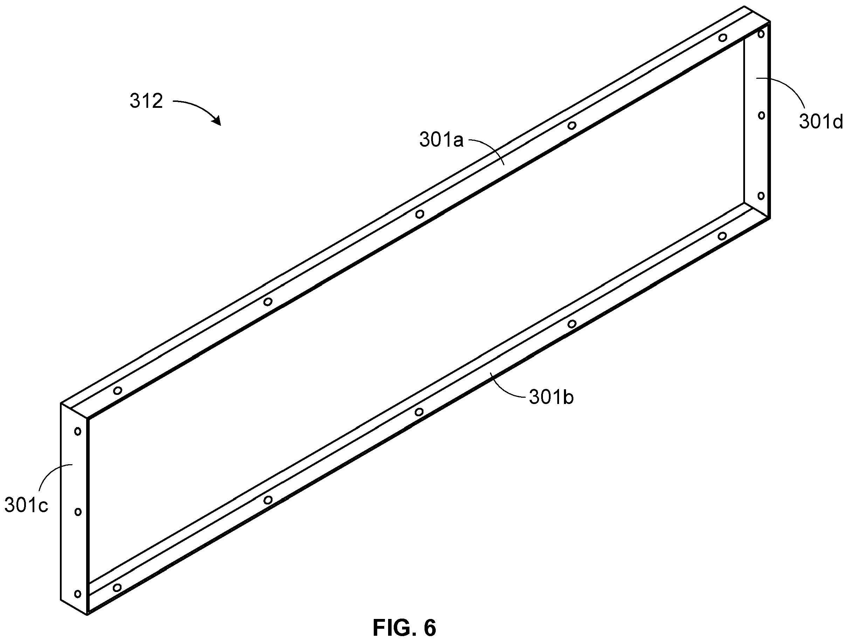

In an alternative embodiment, such as illustrated in FIGs. 5 and 6, each of the side panels 106a, 106b is optionally separated into two adjacent panels with respective adjacent flanges. In other words, in the alternative embodiment each of the duct sections 100a, 100b has its own separate side panels. The top panels 102a, 102b are parallel to the bottom panels 108a, 108b, and the side panels 106a, 106b are parallel to each other.

Adjacent flanges of the enclosure duct 100 are fastened to each other to form flanged butt joints between the left duct section 100a and the right duct section 100b. For example, when assembled, the top flange 104a of the left duct section 100a is fastened to the top flange 104b of the right duct section 100b to form a top flanged butt joint. Optionally, a gasket (not shown) is inserted between the flanges for an enhanced sealing of the joint.

The enclosure duct 100 further includes a top pressure ring 112a that is fastened to the top panels 102a, 102b to cover the top flanged butt joint. A bottom pressure ring 112b is fastened to the bottom panels 108a, 108b to cover a respective bottom flanged butt joint. Each pressure ring 112a, 112b is spaced away from the respective top panels 102a, 102b and bottom panels 108a, 108b.

Optionally, the enclosure duct 100 includes a central support 114 that is centrally mounted between the top panels 102a, 102b and the bottom panels 108a, 108b, and is oriented parallel to the side panels 106a, 106b. The central support 114 increases the structural strength of the top panels 102a, 102b and the bottom panels 108a, 108b by, for example, preventing buckling of the panels.

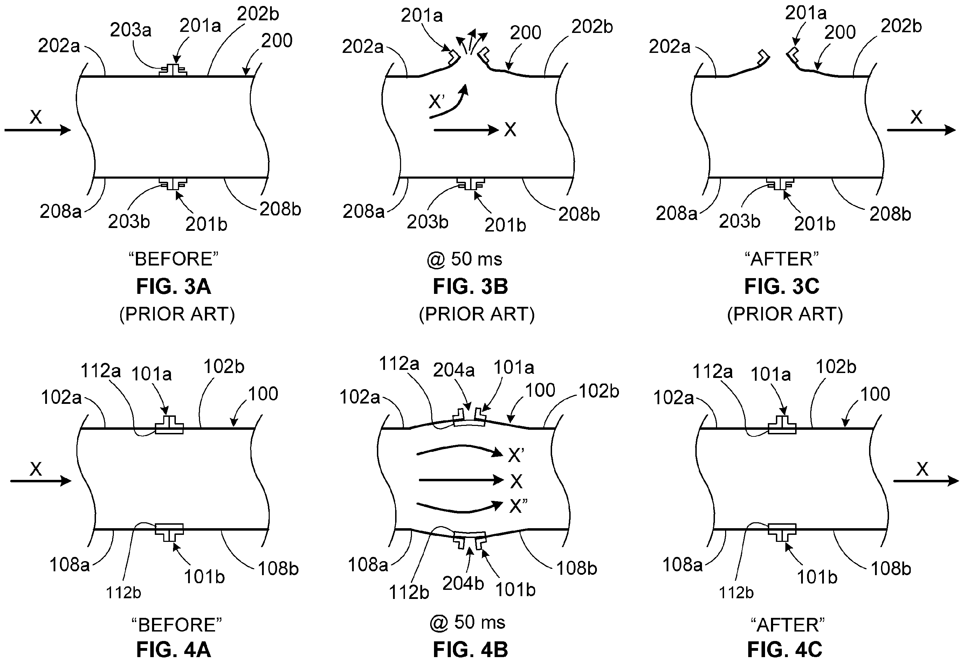

The panels of the duct sections 100a, 100b form an internal space that is in a path through which a pressure wave travels in an X direction during an arc-fault event. The pressure wave travels from the point of origination 116 of the arc-fault event, e.g., at a switchgear, to an exhaust vent 118. The effects of the pressure wave on the pressure rings 112a, 112b are described in more detail below in reference to FIGs. 3A-4C.

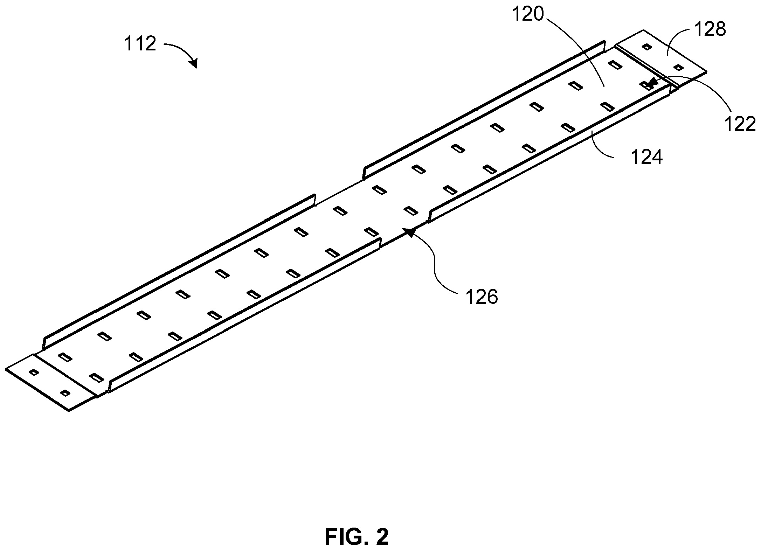

Referring to FIG. 2, a pressure ring 112 is a plate with a main surface 120 having an array of attachment holes 122. The pressure ring 112 is identical to the top and bottom pressure rings 112a, 112b and is described separately for ease of understanding. The attachment holes 122 are provided for fastening the pressure ring 112 to either the top panels 102a, 102b (as the top pressure ring 112a) or the bottom panels 108a, 108b (as the bottom pressure ring 112b).

The pressure ring 112 further includes side walls 124 extending perpendicularly from the main surface 120. Notches 126 in a central location between the side walls 124 accommodate placement of the pressure ring 112 over the central support 114. The side walls 124 create a separation between the pressure ring 112 and the respective top or bottom panels 102a, 102b, 108a, 108b. The separation is an optional features that allows a separation between the main surface 120 of the pressure ring 112 and the respective top or bottom panels 102a, 102b, 108a, 108b. As discussed in more detail below in reference to FIGs. 3A-4c, the separation is helpful in part for absorbing the pressure wave without allowing leaks in-between flanged butt joints.

The pressure ring 112 further includes a pair of brackets 128 extending away from the main surface 120. The brackets 128 are bendable for attachment to respective top, side, or bottom panels of the enclosure duct 100.

Referring to FIGs. 3A-3C, a time sequence is illustrated showing the effects of the pressure wave on a top and bottom flanged butt joints 201a, 201b of a prior art enclosure duct 200. In FIG. 3A, the enclosure duct 200 is illustrated prior to a peak pressure X caused by the arc-fault event. As such, the flanged butt joints 201a, 201b are shown intact with top and bottom fasteners 203a, 203b in their fastened positions. The peak pressure is formed by a pressure wave traveling horizontally and along a central axis between top and bottom panels 202a, 202b, 208a, 208b of the enclosure duct 200.

In FIG. 3B, the enclosure duct 200 is illustrated during the peak pressure X, e.g., 50 ms (milliseconds). The peak pressure X has caused a rupture in the top flanged butt joint 201a with some of the pressure X' escaping through the rupture. The top fastener 203a, which provided a rigid reinforcement to the top flanged butt joint 201a, has been blown off from the top flanged butt joint 201a. Furthermore, the ruptured joint 201a is asymmetric relative to the bottom flanged butt joint 201b, which remains intact in this example. The escaped pressure X' is a safety hazard, likely causing fire and damage to nearby equipment and personnel.

In FIG. 3C, the enclosure duct 200 is illustrated after the peak pressure X. The ruptured joint 201a remains in its ruptured position with severe and permanent deformation to the enclosure duct 200. Thus, the rigid connection provided by the fasteners 203a, 203b has been ineffective. Although the bottom flanged butt joint 201b has remained intact, the rigid connection is in reality counter-productive because it helps in rupturing the top flanged butt joint 201a.

In another example, the peak pressure X causes severe and permanent deformation to both flanged butt joints 201a, 201b. In this example, the rigid reinforcement fails to protect either of the flanged butt joints 201a, 201b. Moreover, the deformation in this example is asymmetric, i.e., each flanged butt joint 201a, 201b is ruptured in a different way.

Referring to FIGs. 4A-4C, a time sequence is illustrated showing the effects of the pressure wave on top and bottom flanged butt joints 101a, 101b of the enclosure duct 100, in accordance with one aspect of the present invention. In FIG. 4A, the enclosure duct 100 is illustrated prior to the peak pressure X caused by the arc-fault event. The peak pressure is formed by a pressure wave traveling horizontally and along a central axis between top and bottom panels 102a, 102b, 108a, 108b of the enclosure duct 100. Both flanged butt joints 101a are shown intact with respective flanges of the joints in sealed contact with each other.

In FIG. 4B, the peak pressure X has caused symmetric deformation of the top flanged butt joint 101a relative to the bottom flanged butt joint 101b. Furthermore, the respective pressure rings 112a, 112b have deformed to absorb the pressure and fill-in (or seal) gaps 204a, 204b created in the respective flanged butt joints 101a, 101b. Consequently, the pressure rings 112a, 112b divert pressure flows X', X" towards the exhaust vent and, thus, prevent unintended escape of pressure through the temporarily deformed flanged butt joints 101a, 101b.

The separation between the main surface of each pressure ring 112a, 112b and the respective top or bottom panels 102a, 102b, 108a, 108b (described above in reference to FIG. 2) is helpful in providing a space for the pressure rings 112a, 112b to deform prior to making contact with the respective panels.

In FIG. 4C, the enclosure duct 100 is illustrated after the peak pressure X. The flanged butt joints 101a, 101b have returned to their original positions after being elastically deformed. In other examples, the flanged butt joints 101a, 101b plastically deform to some degree but in an uniform manner. By way of example, the flanged butt joints 101a, 101b may deform similarly to a balloon that has been inflated beyond the elastic limit (prior to rupturing, or popping) and, then, deflated. The deflated balloon has been uniformly stretched. Similarly, the flanged butt joints 101a, 101b may plastically deform in an uniform and/or symmetrical manner without rupturing.

Thus, instead of restricting the deformation with added flange reinforcements (such as fasteners 203a, 203b of the prior art duct enclosure 200) and/or heavier gauge duct panels, the pressure rings 112a, 112b allow the enclosure duct 100 to deform while maintaining the integrity of the joints 101a, 101b. In other words, the pressure rings 112a, 112b anticipate and embrace the deformation, instead of attempting to prevent it.

Referring to FIG. 5, an enclosure duct 300 includes an alternative arrangement of a pressure ring 312. The enclosure duct 300 includes two adjacent duct sections 300a, 300b having a rectangular cross-sectional profile and in which there is no common panel (like the side panels 106a, 106b of the enclosure duct 100 described in reference to FIG. 1). Specifically, in addition to having separate top and bottom panels (not shown in FIG. 5), the duct sections 300a, 300b have separate side panels. A left duct section 300a has its own front and back side panels 306ai, 306bi and a right duct section 300b has its own front and back side panels 306aii, 306bii.

The duct sections 300a, 300b are adjoined all-around at each flanged butt joint 301a-301d between respective adjacent panels. The flanged butt joints 301a-301d are standing seams facing outward and include a top flanged butt joint 301a, a bottom flanged butt joint 301b, a left flanged butt joint 301c, and a right flanged butt joint 301d. As such, the duct sections 300a, 300b have a flanged butt joint at each side of its rectangular cross-sectional profile.

Referring to FIG. 6, the pressure ring 312 has a matching rectangular cross-sectional profile to the profile of the duct sections 300a, 300b. The pressure ring 312 has a top side 301a, a bottom side 301b, a left side 301c, and a right side 301d. Each of the four sides 301a-301d is a sheet metal plate having attachment holes 322 for fastening the respective side to a corresponding flanged butt joint 301a-301d (e.g., the top side 301a is attached to the top flanged butt joint 301a, the bottom side 301b is attached to the bottom flanged butt joint 301b, etc.). Similar to the embodiment illustrated in FIG. 2, the pressure ring 312 bends and conforms to absorb the pressure created by the arc-fault event while maintaining the integrity of the seal between the flanged butt joints 301a-301d.

The pressure rings 112, 312 can be used especially in all medium voltage and high voltage switchgear and control-gear enclosures. For example, the enclosures include medium voltage enclosures for voltage ranging between about 600 volts and 36,000 volts. In another example, the enclosures include high voltage enclosures for voltage of about or greater than 36,000 volts. Potentially catastrophic effects of arc-fault events in such enclosures are eliminated, or greatly reduced, by the pressure rings 112, 313 described above.

While particular embodiments, aspects, and applications of the present invention have been illustrated and described, it is to be understood that the invention is not limited to the precise construction and compositions disclosed herein and that various modifications, changes, and variations may be apparent from the foregoing descriptions without departing from the scope of the invention as defined in the appended claims.

## Claims

1. An electrical enclosure assembly (100, 300) comprising:
a first duct section (100a, 300a) having a first panel (102a) with a first flange (104a);
a second duct section (100b, 300b) adjacent to the first section and having a second panel (102b) with a second flange (104b), the second flange being fastened to the first flange of the first panel to form a flanged butt joint (101a, 301a) between the first and second duct sections, the first and second duct sections being in a path through which a pressure wave travels during an arc-fault event in the enclosure to an exhaust vent, **characterized in that** the electrical enclosure assembly further comprises
a pressure ring (112, 312) fastened to at least one of the first and second panels and internally covering the flanged butt joint, the pressure ring being configured to deform with the first and second panels in response to a peak pressure of the pressure wave, the deformation causing the pressure ring to fill-in gaps created in the flanged butt joint by the peak pressure during the arc-fault event.

2. The electrical enclosure assembly of claim 1, wherein the path of the pressure wave through the first and second duct sections is horizontal.

3. The electrical enclosure assembly of claim 1, wherein the pressure ring is fastened to both the first and second panels.

4. The electrical enclosure assembly of claim 1, wherein the flanged butt joint is a standing seam facing outward.

5. The electrical enclosure assembly of claim 1, wherein the pressure ring and the first and second duct sections have matching rectangular cross-sectional profiles.

6. The electrical enclosure assembly of claim 5, wherein the first duct section further includes a third panel (108a) with a third flange and the second duct section further includes a fourth panel (108b) with a fourth flange, the third flange and the fourth flange forming another flanged butt joint (101b) between the first and second duct section, the pressure ring being fastened to at least one of the third and fourth panels to cover the additional flanged butt joint.

7. The electrical enclosure assembly of claim 6, wherein the first and second panels are parallel to the third and fourth panels.

8. The electrical enclosure assembly of claim 7, wherein the first and second panels are respective top panels of the first and second duct sections and the third and fourth panels are respective bottom panels of the first and second duct sections.

9. The electrical enclosure assembly of claim 8, wherein the pressure ring is deformable symmetrically along a central axis between the top and bottom panels.

10. The electrical enclosure assembly of claim 1, wherein:
the first and second duct sections have rectangular profiles formed by respective top, bottom, left, and right panels, and the flanged butt joint is a top butt joint formed by two fastened top flanges, each of the top flanges being attached to a respective top panel;
the electrical enclosure assembly further comprising:
a bottom butt joint formed by two fastened bottom flanges, each of the bottom flanges being attached to a respective bottom panel; and wherein
the pressure ring is mounted within an internal space of the duct sections and having a matching rectangular profile to the rectangular profiles of the duct sections, the pressure ring being attached to at least one of the top panels and at least one of the bottom panels to cover both the top butt joint and the bottom butt joint, the pressure ring being configured to deform in response to a peak pressure of the pressure wave, the deformation causing the pressure ring to seal the top and bottom butt joints during the arc-fault event.

11. The electrical enclosure assembly of claim 10, wherein the path of the pressure wave through the duct sections is horizontal.

12. The electrical enclosure assembly of claim 10, wherein the top and bottom butt joints are each a standing seam facing outward.

13. The electrical enclosure assembly of claim 10, wherein the pressure ring deforms symmetrically along a central axis of the duct sections.

14. The electrical enclosure assembly of claims 1 or 10, wherein the pressure ring is a sheet metal plate.

15. The electrical enclosure assembly of claims 1 or 10, wherein the pressure ring deforms elastically in response to the peak pressure.

## Patentansprüche

1. Eine elektrische Gehäusebaugruppe (100, 300), die Folgendes beinhaltet:
eine erstes Kanalteilstück (100a, 300a), das eine erste Platte (102a) mit einem ersten Flansch (104a) aufweist;
eine zweites Kanalteilstück (100b, 300b), das an das erste Teilstück angrenzt und eine zweite Platte (102b) mit einem zweiten Flansch (104b) aufweist,
wobei der zweite Flansch an dem ersten Flansch der ersten Platte befestigt ist, um eine geflanschte Stoßverbindung (101a, 301a) zwischen dem ersten und zweiten Kanalteilstück zu bilden, wobei das erste und zweite Kanalteilstück auf einem Weg liegen, auf dem eine Druckwelle während eines Fehlerlichtbogenereignisses in der Gehäuse zu einer Abluftöffnung wandert, **dadurch gekennzeichnet, dass** die elektrische Gehäusebaugruppe ferner einen Druckring (112, 312) beinhaltet, der mindestens an einer der ersten und zweiten Platte befestigt ist und intern die geflanschte Stoßverbindung abdeckt, wobei der Druckring konfiguriert ist, sich mit der ersten und zweiten Platte als Reaktion auf einen Spitzendruck der Druckwelle zu verformen, wobei die Verformung den Druckring veranlasst, in der geflanschten Stoßverbindung durch den Spitzendruck während des Fehlerlichtbogenereignisses erzeugte Lücken zu füllen.

2. Elektrische Gehäusebaugruppe gemäß Anspruch 1, wobei der Weg der Druckwelle durch das erste und zweite Kanalteilstück horizontal ist.

3. Elektrische Gehäusebaugruppe gemäß Anspruch 1, wobei der Druckring sowohl an der ersten als auch an der zweiten Platte befestigt ist.

4. Elektrische Gehäusebaugruppe gemäß Anspruch 1, wobei die geflanschte Stoßverbindung eine nach außen weisende Stehfalz ist.

5. Elektrische Gehäusegruppe gemäß Anspruch 1, wobei der Druckring und das erste und zweite Kanalteilstück zusammenpassende rechtwinklige Querschnittsprofile aufweisen.

6. Elektrische Gehäusebaugruppe gemäß Anspruch 5, wobei das erste Kanalteilstück ferner eine dritte Platte (108a) mit einem dritten Flansch umfasst und das zweite Kanalteilstück ferner eine vierte Platte (108b) mit einem vierten Flansch umfasst, wobei der dritte Flansch und der vierte Flansch eine weitere geflanschte Stoßverbindung (101b) zwischen dem ersten und zweiten Kanalteilstück bilden, wobei der Druckring an mindestens eine der dritten und vierten Platte befestigt ist, um die zusätzliche geflanschte Stoßverbindung abzudecken.

7. Elektrische Gehäusebaugruppe gemäß Anspruch 6, wobei die erste und zweite Platte zu der dritten und vierten Platte parallel liegen.

8. Elektrische Gehäusebaugruppe gemäß Anspruch 7, wobei die erste und zweite Platte jeweilige obere Platten des ersten und zweiten Kanalteilstücks sind und die dritte und vierte Platte jeweilige untere Platten des ersten und zweiten Kanalteilstücks sind.

9. Elektrische Gehäusebaugruppe gemäß Anspruch 8, wobei der Druckring symmetrisch entlang einer Mittelachse zwischen den oberen und unteren Platten verformbar ist.

10. Elektrische Gehäusebaugruppe gemäß Anspruch 1, wobei:
das erste und zweite Kanalteilstück rechteckige Profile aufweisen, die durch jeweilige obere, untere, linke und rechte Platten gebildet werden, und die geflanschte Stoßverbindung eine obere Stoßverbindung ist, die durch zwei befestigte obere Flansche gebildet wird, wobei jeder der oberen Flansche an einer jeweiligen oberen Platte angebracht ist; wobei die elektrische Gehäusebaugruppe ferner Folgendes beinhaltet:
eine untere Stoßverbindung, die durch zwei befestigte untere Flansche gebildet wird, wobei jede der unteren Flansche an einer jeweiligen unteren Platte angebracht ist; und wobei
der Druckring innerhalb eines Innenraums der Kanalteilstücke montiert ist und ein mit den rechtwinkligen Profilen der Kanalteilstücke zusammenpassendes rechtwinkliges Profil aufweist, wobei der Druckring an mindestens einer der oberen Platten und mindestens einer der unteren Platten angebracht ist, um sowohl die obere Stoßverbindung als auch die untere Stoßverbindung abzudecken, wobei der Druckring konfiguriert ist, um sich als Reaktion auf einen Spitzendruck der Druckwelle zu verformen, wobei die Verformung den Druckring veranlasst, die obere und untere Stoßverbindung während des Fehlerlichtbogenereignisses abzudichten.

11. Elektrische Gehäusebaugruppe gemäß Anspruch 10, wobei der Weg der Druckwelle durch die Kanalteilstücke horizontal ist.

12. Elektrische Gehäusebaugruppe gemäß Anspruch 10, wobei die obere und untere Stoßverbindung jeweils eine nach außen weisende Stehfalz sind.

13. Elektrische Gehäusebaugruppe gemäß Anspruch 10, wobei sich der Druckring symmetrisch entlang einer Mittelachse der Kanalteilstücke verformt.

14. Elektrische Gehäusebaugruppe gemäß Ansprüchen 1 oder 10, wobei der Druckring eine Metallblechplatte ist.

15. Elektrische Gehäusebaugruppe gemäß Ansprüchen 1 oder 10, wobei sich der Druckring als Reaktion auf den Spitzendruck elastisch verformt.

## Revendications

1. Un ensemble boîtier électrique (100, 300) comprenant :
une première section de conduit (100a, 300a) ayant un premier panneau (102a) avec une première collerette (104a) ;
une deuxième section de conduit (100b, 300b) adjacente à la première section et ayant un deuxième panneau (102b) avec une deuxième collerette (104b),
la deuxième collerette étant fixée à la première collerette du premier panneau pour former un joint bout à bout à collerette (101a, 301a) entre les première et deuxième sections de conduit, les première et deuxième sections de conduit se trouvant sur une trajectoire traversée par une onde de pression voyageant pendant un événement de défaut d'arc dans le boîtier vers un évent d'évacuation, **caractérisé en ce que** l'ensemble boîtier électrique comprend en outre un anneau de pression (112, 312) fixé à au moins l'un des premier et deuxième panneaux et recouvrant de façon interne le joint bout à bout à collerette, l'anneau de pression étant configuré pour se déformer avec les premier et deuxième panneaux en réponse à un pic de pression de l'onde de pression, la déformation amenant l'anneau de pression à combler des espaces créés dans le joint bout à bout à collerette par le pic de pression pendant l'événement de défaut d'arc.

2. L'ensemble boîtier électrique de la revendication 1, dans lequel le trajet de l'onde de pression dans les première et deuxième sections de conduit est horizontal.

3. L'ensemble boîtier électrique de la revendication 1, dans lequel l'anneau de pression est fixé à la fois au premier et au deuxième panneau.

4. L'ensemble boîtier électrique de la revendication 1, dans lequel le joint bout à bout à collerette est de type joint debout tourné vers l'extérieur.

5. L'ensemble boîtier électrique de la revendication 1, dans lequel l'anneau de pression et les première et deuxième sections de conduit ont des profils en coupe transversale rectangulaires correspondants.

6. L'ensemble boîtier électrique de la revendication 5, dans lequel la première section de conduit inclut en outre un troisième panneau (108a) avec une troisième collerette et la deuxième section de conduit inclut en outre un quatrième panneau (108b) avec une quatrième collerette, la troisième collerette et la quatrième collerette formant un autre joint bout à bout à collerette (101b) entre les première et deuxième sections de conduit, l'anneau de pression étant fixé à au moins l'un des troisième et quatrième panneaux pour recouvrir le joint bout à bout à collerette supplémentaire.

7. L'ensemble boîtier électrique de la revendication 6, dans lequel les premier et deuxième panneaux sont parallèles aux troisième et quatrième panneaux.

8. L'ensemble boîtier électrique de la revendication 7, dans lequel les premier et deuxième panneaux sont des panneaux supérieurs respectifs des première et deuxième sections de conduit et les troisième et quatrième panneaux sont des panneaux inférieurs respectifs des première et deuxième sections de conduit.

9. L'ensemble boîtier électrique de la revendication 8, dans lequel l'anneau de pression est déformable symétriquement le long d'un axe central entre les panneaux supérieurs et inférieurs.

10. L'ensemble boîtier électrique de la revendication 1, dans lequel :
les première et deuxième sections de conduit ont des profils rectangulaires formés par des panneaux supérieurs, inférieurs, gauches, et droits respectifs, et le joint bout à bout à collerette est un joint bout à bout supérieur formé par deux collerettes supérieures fixées, chacune des collerettes supérieures étant assujettie à un panneau supérieur respectif ;
l'ensemble boîtier électrique comprenant en outre :
un joint bout à bout inférieur formé par deux collerettes inférieures fixées, chacune des collerettes inférieures étant assujettie à un panneau inférieur respectif ; et dans lequel l'anneau de pression est monté au sein d'un espace interne des sections de conduit et a un profil rectangulaire correspondant aux profils rectangulaires des sections de conduit, l'anneau de pression étant assujetti à au moins l'un des panneaux supérieurs et à au moins l'un des panneaux inférieurs pour recouvrir à la fois le joint bout à bout supérieur et le joint bout à bout inférieur, l'anneau de pression étant configuré pour se déformer en réponse à un pic de pression de l'onde de pression, la déformation amenant l'anneau de pression à sceller les joints bout à bout supérieur et inférieur pendant l'événement de défaut d'arc.

11. L'ensemble boîtier électrique de la revendication 10, dans lequel le trajet de l'onde de pression dans les sections de conduit est horizontal.

12. L'ensemble boîtier électrique de la revendication 10, dans lequel les joints bout à bout supérieur et inférieur sont chacun un joint debout tourné vers l'extérieur.

13. L'ensemble boîtier électrique de la revendication 10, dans lequel l'anneau de pression se déforme symétriquement le long d'un axe central des sections de conduit.

14. L'ensemble boîtier électrique de la revendication 1 ou de la revendication 10, dans lequel l'anneau de pression est une plaque de tôle.

15. L'ensemble boîtier électrique de la revendication 1 ou de la revendication 10, dans lequel l'anneau de pression se déforme élastiquement en réponse au pic de pression.
